# FASCICULE DE BREVET EUROPEEN

(11) **EP 3 288 789 B1**
(45) Date de publication et mention de la délivrance du brevet: **13.02.2019**
(21) Numéro de dépôt: 16718397.9
(22) Date de dépôt: 22.03.2016
(51) Int. Cl.: B60K 6/44, B60K 6/52, B60K 17/34, B60W 30/18, F02N 11/00, B60W 30/20, B60W 20/40, B60K 28/04, B60K 28/12, B60W 10/06, B60W 10/08

(54) **GESTION DES DEMARRAGES DU MOTEUR THERMIQUE D'UN VEHICULE HYBRIDE ASSURANT LA SÉCURITÉ EN CAS D'ABSENCE DU CONDUCTEUR**
MANAGEMENT VOM START DES VERBRENNUNGSMOTORS EINES HYBRIDFAHRZEUGS ZUM GEWÄHRLEISTEN DER SICHERHEIT BEI ABWESENHEIT DES FAHRERS
START UP MANAGEMENT OF THE COMBUSTION ENGINE OF A HYBRIDE VEHICLE ENSURING SAFETY IN CASE OF DRIVER ABSENCE

(30) Priorité: 27.04.2015 FR 1553759
(43) Date de publication de la demande: 07.03.2018
(73) Titulaire: PSA AUTOMOBILES S.A., 78300 Poissy (FR)
(72) Inventeur: MILHAU, Yohan, 78400 Chatou (FR); ROCQ, Gaetan, 78125 La Boissiere Ecole (FR); BARDET, Arnaud, 78150 Le Chesnay (FR); BLANCHET, Alexandre, 78124 Montainville (FR)
(86) Numéro de dépôt international: PCT/FR2016/050624
(87) Numéro de publication internationale: WO 2016/174319

(56) Documents cités:
- EP-A1- 2 772 397
- WO-A1-2014/170749
- DE-A1-102013 003 675
- US-A1- 2009 292 455
- US-A1- 2012 259 496

## Description

La présente invention concerne un procédé de gestion du démarrage du moteur thermique d'un véhicule automobile hybride, comprenant un mode de marche du type rampante, ainsi qu'un véhicule automobile comportant des moyens mettant en oeuvre un tel procédé de gestion.

Un type de véhicule automobile hybride connu comporte un moteur thermique constituant la motorisation principale, qui entraîne les roues motrices par une transmission mécanique, et une motorisation auxiliaire reliée à des dispositifs de stockage d'une énergie auxiliaire, qui peut fonctionner en moteur en délivrant un couple additionnel aux roues, ou en générateur freinant le véhicule en rechargeant ces dispositifs de stockage.

En particulier l'énergie auxiliaire peut être une énergie électrique stockée dans des batteries, un fluide stocké dans un accumulateur de pression, ou d'autres sources d'énergies comme de l'air comprimé.

Ces véhicules hybrides présentent plusieurs modes de fonctionnement, comprenant en particulier un mode hybride avec le moteur thermique et la motorisation auxiliaire, un mode zéro émission appelé « ZEV » comportant une traction avec la motorisation auxiliaire, le moteur thermique étant arrêté, un mode combiné appelé « Sport » comportant une traction avec les deux motorisations pour disposer d'une puissance maximale, et un mode freinage freinant le véhicule avec une récupération d'énergie rechargeant la réserve d'énergie auxiliaire.

De plus dans le cas d'un moteur thermique entraînant les roues avant et d'une motorisation auxiliaire entraînant les roues arrière, on peut avoir un mode quatre roues motrices appelé « E-AWD », permettant d'améliorer la tenue de route du véhicule dans certaines conditions.

Par ailleurs les boîtes de vitesses automatiques développées pour les véhicules automobiles conventionnels sans hybridation, comportent généralement un mode de marche rampante donné par le moteur thermique tournant au ralenti, entraînant le véhicule à une vitesse réduite par le convertisseur de couple présentant un glissement. Ce mode permet en particulier de contrôler le véhicule pour les manoeuvres, pour des vitesses comprises généralement entre 4 à 12km/h, avec uniquement la pédale de frein pour l'arrêter.

On peut aussi créer un mode similaire de marche rampante avec une transmission comportant un système d'accouplement automatisé en entrée comme un embrayage, notamment une boîte de vitesses du type manuel robotisée, une boîte de vitesses à doubles embrayages, ou une transmission à rapport continûment variable.

Un procédé de mise en oeuvre du mode de marche rampante venant du moteur thermique entraînant le véhicule, présenté notamment par le document FR-B1-2909059, comporte une commande spécifique actionnée par le conducteur permettant sous certaines conditions l'activation ou la désactivation de ce mode. On peut utiliser notamment une commande formant une palette disposée près du volant, facilement accessible par le conducteur pour l'actionner au cours du roulage.

Pour les véhicules hybrides présentés ci-dessus, on peut aussi réaliser un mode de marche rampante auxiliaire comportant pour le conducteur un fonctionnement similaire, à partir de la motorisation auxiliaire entraînant le véhicule à une petite vitesse.

Toutefois ce mode de marche rampante auxiliaire peut présenter des problèmes, notamment d'échauffement et d'usure de la machine auxiliaire, et de consommation d'énergie auxiliaire qui réduit l'autonomie du véhicule.

On a généralement une stratégie de désactivation du mode de marche rampante pour assurer le confort et la sécurité, notamment si le conducteur désactive cette fonction par la commande spécifique ou par la position du levier de commande de la transmission, s'il appuie sur la pédale de frein, ou si le véhicule détecte une absence du conducteur, par exemple par l'ouverture de sa portière.

Une stratégie de désactivation du mode de marche rampante, présentée notamment par le document EP-B1-2090487, interdit ce mode sous certaines conditions comprenant la présence du conducteur et l'absence d'un obstacle devant le véhicule. Toutefois certains roulages sont alors interdits, comme avec la porte du conducteur ouverte, alors qu'ils pourraient être utilisés dans des conditions précises.

Par ailleurs on peut avoir à partir d'un roulage du véhicule avec le mode de marche rampante donné par la machine auxiliaire, dans le cas où le conducteur demande par une commande le démarrage du moteur thermique, une transition désagréable causée par le fonctionnement de ce moteur thermique qui donnerait un mode de marche rampante différent.

Le document US 2012/259496 A1 décrit un procédé de gestion des démarrages du moteur thermique d'un véhicule hybride comportant un mode de marche rampante auxiliaire et divulgue le préambule de la revendication 1.

La présente invention a notamment pour but de résoudre ces problèmes de l'art antérieur.

Elle propose à cet effet un procédé de gestion des démarrages du moteur thermique d'un véhicule hybride, comportant une machine auxiliaire de traction pouvant donner un mode de marche rampante auxiliaire, et une transmission automatisée liée au moteur thermique pouvant donner aussi un mode de marche rampante thermique, ce véhicule comportant une commande actionnée par le conducteur qui demande un démarrage du moteur thermique, ce procédé effectue, pendant une marche rampante auxiliaire, à partir d'une demande de démarrage du moteur thermique par le conducteur, une première sélection donnant si la vitesse du véhicule est supérieure à un seuil de vitesse minimum, une demande de démarrage de ce moteur d'un deuxième type lui permettant d'assurer une traction du véhicule, ce procédé étant remarquable en ce qu'il effectue en dessous de ce seuil minimum une demande de démarrage de ce moteur d'un premier type comprenant une interdiction de la traction du véhicule par le moteur thermique.

Un avantage de ce procédé de gestion est qu'au-dessus du seuil de vitesse choisi généralement un peu supérieur à la vitesse de marche rampante auxiliaire, on peut assurer normalement de manière confortable une traction par le moteur thermique, et en dessous de ce seuil on interdit cette traction de manière à éviter une transition qui pourrait provoquer des à-coups sensibles et inconfortables.

Le procédé de gestion des démarrages selon l'invention peut de plus comporter une ou plusieurs des caractéristiques suivantes, qui peuvent être combinées entre elles.

Avantageusement, le seuil de vitesse minimum est supérieur à la vitesse du mode de marche rampante auxiliaire.

Avantageusement, pendant le fonctionnement du véhicule après une demande de démarrage du moteur thermique du premier type, il applique une autre sélection qui vérifie s'il y a une demande de démarrage du moteur thermique du deuxième type en cours, pour dans le cas positif effectuer dans une étape suivante une fin de demande de démarrage du premier type remplacée par une demande de démarrage du deuxième type, et dans le cas négatif effectuer à nouveau régulièrement cette deuxième sélection.

En particulier le procédé de gestion peut maintenir la demande de démarrage du premier type pendant un temps minimum.

Avantageusement après une demande de démarrage du deuxième type, le procédé effectue une autre sélection sur la fin du mode automatique séquentiel de commande de la transmission par le conducteur, ou sur une absence de ce mode automatique séquentiel avec une demande de démarrage du deuxième type qui dépasse une durée prédéterminée, dans le cas positif il passe à une étape suivante d'arrêt de la demande de démarrage du deuxième type, et dans le cas négatif il maintient la demande de démarrage du moteur thermique du deuxième type.

Selon un mode de réalisation, le procédé de gestion met en oeuvre une stratégie complémentaire de sécurisation des demandes de démarrage du moteur thermique du deuxième type en l'absence du conducteur.

Dans ce cas, la stratégie de sécurisation peut comporter une sélection sur la présence sécuritaire du conducteur, présentant une réponse négative si la porte du conducteur est ouverte avec une vitesse du véhicule inférieure à un seuil de vitesse maximum.

En complément, le seuil de vitesse maximum peut comporter une hystérésis présentant une valeur haute qui doit être d'abord franchie avec la vitesse augmentant, puis une valeur basse qui doit être franchie avec la vitesse redescendant.

Avantageusement, la stratégie de sécurisation comporte une sélection sur la présence sécuritaire du conducteur, présentant une réponse positive après l'actionnement d'une pédale quel que soit l'état de la porte conducteur.

L'invention a aussi pour objet un véhicule automobile hybride comportant une machine auxiliaire de traction pouvant donner un mode de marche rampante auxiliaire, et un moteur thermique lié à une transmission automatisée pouvant donner aussi un mode de marche rampante, ce véhicule comportant de plus des moyens mettant en oeuvre un procédé de gestion des démarrages du moteur thermique comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma logique présentant le fonctionnement du procédé de gestions des démarrages selon l'invention ;
- les figures 2 à 4 sont des schémas logiques d'une stratégie complémentaire de sécurisation de ce procédé de démarrage ; et
- la figure 5 est un diagramme présentant en fonction du temps le fonctionnement de cette stratégie complémentaire.

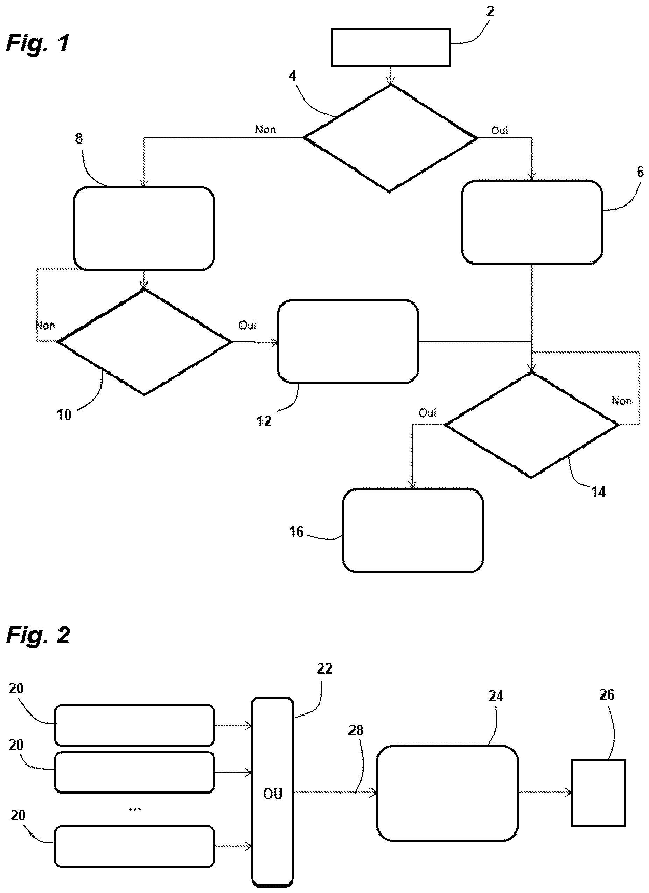

La figure 1 présente un procédé mis en oeuvre par un véhicule hybride électrique lorsque le moteur thermique est en mesure de délivrer un couple aux roues, comprenant notamment le contact par clé mis, et le levier de commande de la transmission dans une position de marche, comme les positions « Drive », « Reverse », « Manu ». Le procédé n'est pas mis en oeuvre si le contact par clé n'est pas mis, ou si le levier est en position « Neutre » ou « Parking ».

Le véhicule roulant avec un mode de rampage électrique, à partir d'une action du conducteur 2 sur une commande de demande de démarrage moteur thermique, qui peut être une palette près du volant, ou un positionnement du levier de commande de la transmission dans un mode particulier, le procédé effectue une première sélection 4 vérifiant si la vitesse du véhicule est supérieure à un seuil de vitesse minimum relativement bas.

Avantageusement le seuil de vitesse minimum est un peu supérieur à la vitesse de marche rampante électrique, il est par exemple de 12km/h.

Dans le cas où la première sélection 4 est positive, le procédé demande un démarrage du moteur thermique d'un deuxième type 6, comportant la possibilité de tracter le véhicule par ce moteur.

On obtient alors un fonctionnement hybride du type parallèle avec le moteur thermique et la motorisation électrique pouvant délivrer chacun un couple de traction du véhicule. La répartition des couples est déterminée par les fonctions habituelles d'optimisation de consigne de couple, notamment pour réduire la consommation d'énergie. La transmission de ce moteur est commandée de manière automatique pour répondre à la demande de couple.

Le moteur thermique peut en particulier délivrer un couple sur les roues avant du véhicule alors que la machine électrique de traction délivre un couple sur les roues arrière, pour assurer un mode de fonctionnement à quatre roues motrices « E-AWD », ou pour la mise en oeuvre d'une fonction de contrôle de stabilité du véhicule du type « ESP ».

Le moteur thermique peut aussi délivrer un couple sur les roues du véhicule pour limiter l'usage de la machine électrique de traction afin de réduire la consommation d'énergie électrique, ou de protéger les organes de ce mode de traction pour éviter une usure ou un échauffement.

Dans le cas où la première sélection 4 est négative, le procédé demande un démarrage du moteur thermique d'un premier type 8, lui interdisant la traction du véhicule.

Le moteur thermique peut alors notamment délivrer par une génératrice qui lui est liée un courant électrique de recharge des batteries, ou d'alimentation de la machine électrique de traction pour permettre un fonctionnement hybride du type série. Le moteur thermique peut aussi fonctionner pour répondre à des besoins de climatisation du véhicule.

Le déplacement du véhicule continue à être assuré uniquement par la machine électrique de traction. Ce déplacement suivant le même mode évite un changement d'état de couplage de la chaîne de traction du véhicule à vitesse faible, qui en ajoutant un entraînement par le moteur thermique pourrait créer des chocs inconfortables perturbant le conducteur.

Par ailleurs on a bien après la demande du conducteur sur la commande de démarrage du moteur thermique, dans tous les cas de vitesse du véhicule un démarrage de ce moteur qui donne au conducteur la sensation que le véhicule répond bien à sa demande, avec une répétabilité qui le rassure.

Pendant le fonctionnement du véhicule après un démarrage du moteur thermique du premier type 8, le procédé effectue une deuxième sélection 10 qui vérifie s'il y a une demande de démarrage du moteur thermique du deuxième type en cours.

Dans le cas positif le procédé effectue dans une étape suivante 12 une fin de demande de démarrage du premier type, qui est remplacée par une demande de démarrage du deuxième type. Dans le cas négatif le procédé effectue à nouveau régulièrement la deuxième sélection 10.

Pour des besoins sécuritaires on peut en particulier maintenir la demande de démarrage du premier type pendant un temps minimum, compris par exemple entre zéro et trois secondes, afin d'attendre que la demande de démarrage du deuxième type soit confirmée.

Après les demandes de démarrage du deuxième type 6, 12, le procédé effectue une troisième sélection 14 sur la fin du mode automatique séquentiel de commande de la transmission par le conducteur, ou sur une absence de ce mode automatique séquentiel avec une demande du deuxième type qui dépasse une durée prédéterminée.

Le mode automatique séquentiel de commande de la transmission est un mode interne de la stratégie de cette transmission qui est activé par le conducteur par l'intermédiaire d'un levier ou d'une palette, lui permettant de sélectionner le rapport de cette transmission. Ce mode est généralement présent lorsque le levier est en mode automatique ou en mode marche arrière.

La durée prédéterminée de demande du deuxième type peut être comprise entre zéro et quelques minutes. En particulier elle peut comporter une durée infinie, ce qui maintient le fonctionnement du moteur thermique suivant le deuxième type tant que le conducteur n'a pas désactivé la commande de démarrage de ce moteur.

Dans le cas positif de la troisième sélection 14, le procédé passe à une étape suivante 16 d'arrêt du démarrage du deuxième type. Cet arrêt seulement après un certain temps de maintien, permet de rendre reproductible le fonctionnement du moteur thermique suite à une commande du conducteur demandant son démarrage, cette répétabilité rassurant le conducteur.

Dans le cas négatif de la troisième sélection 14, le démarrage du moteur thermique du deuxième type est alors maintenu. Le mode automatique séquentiel de commande de la transmission est toujours actif, ce qui permet de garder le couplage du moteur thermique aux roues. Dans ce cas négatif le procédé effectue à nouveau régulièrement la troisième sélection 14.

La figure 2 présente une stratégie complémentaire de sécurisation du procédé de gestion permettant de sécuriser les demandes de démarrage du moteur thermique du deuxième type en l'absence du conducteur, afin d'éviter des déplacements intempestifs du véhicule pouvant causer des accidents, en particulier suivant le mode de marche rampant.

Plusieurs demandes particulières de démarrage du deuxième type 20 peuvent être émises par le système de contrôle de traction du véhicule, elles sont alors intégrées dans une fonction « OU » 22 afin d'obtenir une demande brute 28 réalisant la synthèse de toutes ces demandes particulières permettant de distinguer une demande de démarrage.

La demande brute est alors adressée à une fonction de sécurisation 24, qui va émettre si la sécurité est assurée une demande globale de démarrage sécurisé du deuxième type 26.

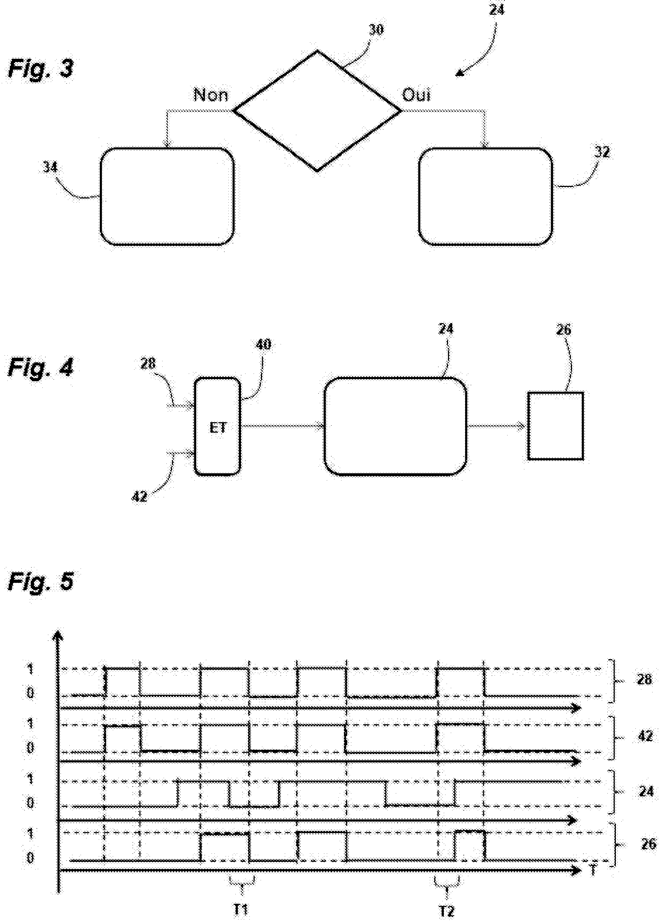

La figure 3 détaille la fonction de sécurisation 24, comportant une sélection 30 sur la présence sécuritaire du conducteur à sa place, afin de s'assurer qu'il peut effectivement contrôler la trajectoire en cas de déplacement du véhicule avec le démarrage du deuxième type permettant ce déplacement.

Dans le cas où la sélection sur la présence sécuritaire 30 est positive on a une autorisation de démarrage moteur thermique du type deux 32, et dans le cas négatif on a une interdiction de ce démarrage 34.

La sélection sur la présence sécuritaire du conducteur 30 présente une réponse négative si la porte du conducteur est ouverte avec une vitesse du véhicule inférieure à un seuil maximum. Avantageusement ce seuil maximum comporte une hystérésis présentant une valeur haute qui doit être d'abord franchie avec la vitesse augmentant, puis une valeur basse qui doit être franchie avec la vitesse redescendant.

Par exemple si la vitesse du véhicule n'a pas franchi la valeur haute du seuil de vitesse maximum, qui peut être de l'ordre de 20km, et que la porte s'ouvre, le conducteur sera considéré comme absent. Si la vitesse du véhicule a franchi la valeur haute, alors le conducteur sera considéré comme absent après une redescente de la vitesse du véhicule en dessous de la valeur basse, qui peut être de l'ordre de 10km/h.

La sélection sur la présence sécuritaire du conducteur 30 présente aussi une réponse positive après l'actionnement d'une pédale, notamment la pédale d'accélérateur ou de frein, quel que soit l'état de la porte conducteur. Elle peut aussi comporter une réponse positive après la fermeture de la porte conducteur, s'il y a un actionnement d'une pédale, cette réponse positive étant maintenue tant que la porte du conducteur n'est pas ouverte.

On notera que ces différentes conditions autorisant un démarrage du moteur thermique du type deux, permettent au conducteur un roulage du véhicule avec la porte ouverte afin notamment de le laisser surveiller par cette porte ouverte une manoeuvre délicate lui demandant une grande visibilité, par exemple pour viser une place de parking.

Par ailleurs dans le cas d'une défaillance, par exemple du capteur de porte, après une intervention du conducteur sur une pédale, on confirme alors la présence sécuritaire de ce conducteur en permettant un roulage du véhicule.

Dans le cas d'une réponse négative de la sélection sur la présence sécuritaire 30, il peut y avoir toutefois une demande de démarrage du type deux dès lors que la demande brute 28 est apparue préalablement avec le conducteur présent, et est toujours maintenue. On a alors quand la demande de démarrage du type deux est établie avec un couplage en cours du moteur thermique aux roues motrices, plus besoin de vérifier la présence sécuritaire du conducteur.

On peut ainsi améliorer la manoeuvrabilité du véhicule. Par exemple dans le mode quatre roues motrices « E-AWD » le démarrage du type deux comportant le couplage du moteur aux roues motrices est maintenu en permanence, même si le conducteur ouvre la porte du véhicule.

Par ailleurs le procédé assure la sécurité en évitant un décollage intempestif du véhicule si le conducteur est absent, par exemple après un besoin de démarrage du moteur thermique, demandé notamment par des fonctions de contrôle de stabilité du véhicule ou de climatisation, alors que le conducteur est absent, ou après une action d'un passager par exemple sur le levier de commande de la transmission, sur une palette de demande de démarrage du moteur thermique ou sur une manette de réglage de la fonction hybride.

La figure 4 présente un complément disposé en amont de la fonction de sécurisation 24, comportant une fonction « ET » 40 qui détecte à la fois la présence de la demande brute 28, et le démarrage du moteur thermique déjà effectué 42, avant de délivrer la demande globale de démarrage sécurisé du deuxième type 26.

La figure 5 présente en fonction du temps T successivement en partant du haut, avec un état 0 pour inactif et 1 pour actif, la demande de démarrage brut 28, le démarrage du moteur thermique déjà effectué 42, la fonction de sécurisation 24, et la demande globale de démarrage sécurisé du deuxième type 26.

On constate qu'on peut avoir avec la stratégie de sécurisation suivant l'invention, au temps T1 une traction du véhicule par le moteur thermique après une absence de détection sécurisée de la présence du conducteur 24, si on avait déjà cette présence avant la demande de démarrage brut 28. On peut avoir aussi au temps T2 un décalage en retard de la traction du véhicule à partir de la demande de démarrage brut 28, tant que la détection de présence du conducteur n'est pas sécurisée 24.

Le même procédé de gestion peut être mis en oeuvre avec un véhicule hybride utilisant une énergie auxiliaire différente de l'électricité, comme un fluide ou un gaz sous pression.

## Revendications

1. Procédé de gestion des démarrages du moteur thermique d'un véhicule hybride, comportant une machine auxiliaire de traction pouvant donner un mode de marche rampante auxiliaire, et une transmission automatisée liée au moteur thermique pouvant donner aussi un mode de marche rampante thermique, ce véhicule comportant une commande actionnée par le conducteur qui demande un démarrage du moteur thermique (2), ledit procédé effectue, pendant une marche rampante auxiliaire, à partir d'une demande de démarrage du moteur thermique par le conducteur (2), une première sélection (4) donnant si la vitesse du véhicule est supérieure à un seuil de vitesse minimum, une demande de démarrage de ce moteur d'un deuxième type lui permettant d'assurer une traction du véhicule (6), et **caractérisé en ce qu'**il effectue en dessous de ce seuil minimum une demande de démarrage de ce moteur d'un premier type comprenant une interdiction de la traction du véhicule (8) par le moteur thermique.

2. Procédé de gestion selon la revendication 1, **caractérisé en ce que** pendant le fonctionnement du véhicule après une demande de démarrage du moteur thermique du premier type (8), il applique une autre sélection (10) qui vérifie s'il y a une demande de démarrage du moteur thermique du deuxième type en cours, pour dans le cas positif effectuer dans une étape suivante (12) une fin de demande de démarrage du premier type remplacée par une demande de démarrage du deuxième type, et dans le cas négatif effectuer à nouveau régulièrement cette deuxième sélection.

3. Procédé de gestion selon la revendication 2, **caractérisé en ce qu'**il maintient la demande de démarrage du premier type pendant un temps minimum.

4. Procédé de gestion selon l'une quelconque des revendications précédentes, **caractérisé en ce qu'**après une demande de démarrage du deuxième type (6, 12), il effectue une autre sélection (14) sur la fin du mode automatique séquentiel de commande de la transmission par le conducteur, ou sur une absence de ce mode automatique séquentiel avec une demande de démarrage du deuxième type qui dépasse une durée prédéterminée, dans le cas positif il passe à une étape suivante (16) d'arrêt de la demande de démarrage du deuxième type, et dans le cas négatif il maintient la demande de démarrage du moteur thermique du deuxième type.

5. Procédé de gestion selon l'une quelconque des revendications précédentes, caractérisé qu'il met en oeuvre une stratégie complémentaire de sécurisation des demandes de démarrage du moteur thermique du deuxième type en l'absence du conducteur.

6. Procédé de gestion selon la revendication 5, **caractérisé en ce que** la stratégie de sécurisation comporte une sélection sur la présence sécuritaire du conducteur (30), présentant une réponse négative si la porte du conducteur est ouverte avec une vitesse du véhicule inférieure à un seuil de vitesse maximum.

7. Procédé de gestion selon la revendication 6, **caractérisé en ce que** le seuil de vitesse maximum comporte une hystérésis présentant une valeur haute qui doit être d'abord franchie avec la vitesse augmentant, puis une valeur basse qui doit être franchie avec la vitesse redescendant.

8. Procédé de gestion selon l'une quelconque des revendications 5 à 7, **caractérisé en ce que** la stratégie de sécurisation comporte une sélection sur la présence sécuritaire du conducteur (30), présentant une réponse positive après l'actionnement d'une pédale quel que soit l'état de la porte conducteur.

9. Véhicule automobile hybride comportant une machine auxiliaire de traction pouvant donner un mode de marche rampante auxiliaire, et un moteur thermique lié à une transmission automatisée pouvant donner aussi un mode de marche rampante, **caractérisé en ce qu'**il comporte des moyens mettant en oeuvre un procédé de gestion des démarrages du moteur thermique réalisé selon l'une quelconque des revendications précédentes.

## Patentansprüche

1. Verfahren zum Management des jeweiligen Starts des Verbrennungsmotors eines Hybridfahrzeugs, umfassend eine Hilfszugmaschine, die einen Hilfsschleichfahrtmodus vorgeben kann, und eine Automatikübertragung, die mit dem Verbrennungsmotor verbunden ist, die auch einen Verbrennungsschleichfahrtmodus vorgeben kann, wobei dieses Fahrzeug eine Steuerung umfasst, die von dem Fahrer, der einen Start des Verbrennungsmotors (2) fordert, betätigt wird, wobei das Verfahren während eines Hilfsschleichfahrtmodus auf Basis eines Startanforderung des Verbrennungsmotors durch den Fahrer (2) eine erste Auswahl (4) ausführt, die, wenn die Geschwindigkeit des Fahrzeugs höher als eine Mindestgeschwindigkeitsgrenze ist, eine Startanforderung dieses Motors eines zweiten Typs vorgibt, die es ihm ermöglicht, eine Traktion des Fahrzeugs (6) zu gewährleisten, und **dadurch gekennzeichnet, dass** es unter dieser Mindestgrenze eine Startanforderung dieses Motors eines ersten Typs ausführt, umfassend ein Verbot der Traktion des Fahrzeugs (8) durch den Verbrennungsmotor.

2. Managementverfahren nach Anspruch 1, **dadurch gekennzeichnet, dass** es während der Funktion des Fahrzeugs nach einer Startanforderung des Verbrennungsmotors des ersten Typs (8) eine weitere Auswahl (10) vornimmt, die überprüft, ob eine Startanforderung des Verbrennungsmotors des zweiten Typs in Gang ist, um im positiven Fall in einem folgenden Schritt (12) ein Ende der Startanforderung des ersten Typs, ersetzt durch eine Startanforderung des zweiten Typs, herbeizuführen, und im negativen Fall wieder regelmäßig diese zweite Auswahl vorzunehmen.

3. Managementverfahren nach Anspruch 2, **dadurch gekennzeichnet, dass** es die Startanforderung des ersten Typs während einer Mindestzeit aufrechterhält.

4. Managementverfahren nach einem der vorhergehenden Ansprüche, **dadurch gekennzeichnet, dass** es nach einer Startanforderung des zweiten Typs (6, 12) eine weitere Auswahl (14) zum Ende des automatischen sequentiellen Steuermodus der Übertragung durch den Fahrer oder zu einem Fehlen dieses sequentiellen Automatikmodus mit einer Startanforderung des zweiten Typs, die eine vorbestimmte Dauer überschreitet, ausführt, im positiven Fall in einen folgenden Schritt (16) des Einstellens der Startanforderung des zweiten Typs übergeht, und im negativen Fall die Startanforderung des Verbrennungsmotors des zweiten Typs aufrechterhält.

5. Managementverfahren nach einem der vorhergehenden Ansprüche, **dadurch gekennzeichnet, dass** es eine komplementäre Sicherungsstrategie der Startanforderungen des Verbrennungsmotors des zweiten Typs bei Abwesenheit des Fahrers einsetzt.

6. Managementverfahren nach Anspruch 5, **dadurch gekennzeichnet, dass** die Sicherungsstrategie eine Auswahl zur Sicherheitsanwesenheit des Fahrers (30) umfasst, die eine negative Antwort aufweist, wenn die Tür des Fahrers offen ist, bei einer Geschwindigkeit des Fahrzeugs unter einer maximalen Geschwindigkeitsgrenze.

7. Managementverfahren nach Anspruch 6, **dadurch gekennzeichnet, dass** die maximale Geschwindigkeitsgrenze eine Hysterese umfasst, die einen hohen Wert aufweist, der zuerst mit der zunehmenden Geschwindigkeit überschritten werden muss, dann einen niedrigen Wert, der mit der abnehmenden Geschwindigkeit überschritten werden muss.

8. Managementverfahren nach einem der Ansprüche 5 bis 7, **dadurch gekennzeichnet, dass** die Sicherungsstrategie eine Auswahl zur Sicherheitsanwesenheit des Fahrers (30) umfasst, die eine positive Antwort nach der Betätigung eines Pedals unabhängig vom Zustand der Fahrertür aufweist.

9. Hybridfahrzeug, umfassend eine Hilfszugmaschine, die einen Hilfsschleichfahrtmodus vorgeben kann, und einen Verbrennungsmotor, der mit einer automatischen Übertragung verbunden ist, die auch einen Hilfsschleichfahrtmodus vorgeben kann, **dadurch gekennzeichnet, dass** es Mittel umfasst, die ein Verfahren zum Management des jeweiligen Starts des Verbrennungsmotors einsetzt, das nach einem der vorhergehenden Ansprüche ausgeführt wird.

## Claims

1. A method for management of the start ups of the combustion engine of a hybrid vehicle, comprising an auxiliary traction machine able to give an auxiliary creeping operation mode, and an automated transmission connected to the combustion engine, being able to also give a combustion creeping operation mode, this vehicle comprising a command actuated by the driver demanding a start up of the combustion engine (2), said method carries out, during an auxiliary creeping operation, from a demand from the driver (2) to start up the combustion engine, a first selection (4) giving rise, if the speed of the vehicle is greater than a minimum speed threshold, to a demand to start up this engine of a second type, permitting is to carry out a traction of the vehicle (6), and **characterized in that** it carries out, below this minimum threshold, a demand to start up this engine of a first type including a prohibition of the traction of the vehicle (8) by the combustion engine.

2. The management method according to Claim 1, **characterized in that** during the operation of the vehicle after a demand to start up the combustion engine of the first type (8), it applies another selection (10) which verifies if there is a current demand to start up the combustion engine of the second type, for carrying out, in the positive case, in a following step (12) an end of start up demand of the first type replaced by a start up demand of the second type and, in the negative case, for carrying out this second selection again regularly.

3. The management method according to Claim 2, **characterized in that** it maintains the start up demand of the first type for a minimum time.

4. The management method according to any one of the preceding claims, **characterized in that** after a start up demand of the second type (6, 12), it carries out another selection (14) on the end of the sequential automatic command mode of the transmission by the driver, or on an absence of this sequential automatic mode with a start up demand of the second type which exceeds a predetermined duration, in the positive case it passes to a following stop step (16) of the start up demand of the second type, and in the negative case it maintains the start up demand of the combustion engine of the second type.

5. The management method according to any one of the preceding claims, **characterized in that** it implements a complementary security strategy of the start up demands of the combustion engine of the second type in the absence of the driver.

6. The management method according to Claim 5, **characterized in that** the security strategy comprises a selection on the security presence of the driver (30), presenting a negative response if the driver's door is open with a speed of the vehicle less than a maximum speed threshold.

7. The management method according to Claim 6, **characterized in that** the maximum speed threshold comprises a hysteresis presenting a high value which must first be crossed with the speed increasing, then a low value which must be crossed with the speed descending again.

8. The management method according to any one of Claims 5 to 7, **characterized in that** the security strategy comprises a selection on the security presence of the driver (30), presenting a positive response after the actuation of a pedal, whatever the status of the driver's door.

9. A hybrid motor vehicle comprising an auxiliary traction machine being able to give an auxiliary creeping operation mode, and a combustion engine connected to an automated transmission being able to also give a creeping operation mode, **characterized in that** it comprises means implementing a management method of the start ups of the combustion engine realized according to any one of the preceding claims.
